# EUROPÄISCHE PATENTSCHRIFT

(11) **EP 2 614 234 B1**
(45) Veröffentlichungstag und Bekanntmachung des Hinweises auf die Patenterteilung: **07.10.2020**
(21) Anmeldenummer: 11749177.9
(22) Anmeldetag: 29.08.2011
(51) Int. Cl.: F02B 37/18

(54) **TOLERANZBEREINIGTER AKTUATOR UND ZUGEHÖRIGES HERSTELLUNGSVERFAHREN**
TOLERANCE-CORRECTED ACTUATOR AND ASSOCIATED PRODUCTION METHOD
ACTIONNEUR À RATTRAPAGE DES TOLÉRANCES ET PROCÉDÉ DE FABRICATION ASSOCIÉ

(30) Priorität: 10.09.2010 DE 102010040583
(43) Veröffentlichungstag der Anmeldung: 17.07.2013
(73) Patentinhaber: BMTS Technology GmbH & Co. KG, 70376 Stuttgart (DE)
(72) Erfinder: NAUNHEIM, Dirk, 70176 Stuttgart (DE); SCHÄFLEIN, Jochen, 70327 Stuttgart (DE)
(74) Vertreter: BRP Renaud & Partner mbB Rechtsanwälte Patentanwälte Steuerberater
(86) Internationale Anmeldenummer: PCT/EP2011/064814
(87) Internationale Veröffentlichungsnummer: WO 2012/031930

(56) Entgegenhaltungen:
- EP-A2- 0 976 919
- EP-A2- 1 256 703
- WO-A1-2004/053299
- WO-A1-2010/149442
- WO-A1-2011/026471
- DE-A1-102008 032 926
- DE-A1-102008 045 227
- DE-A1-102010 048 149
- FR-A1- 2 707 712
- US-A1- 2005 050 888

## Beschreibung

Die vorliegende Erfindung betrifft ein Verfahren zur Herstellung eines toleranzbereinigten Aktuators für eine Ladeeinrichtung, insbesondere für einen Abgasturbolader eines Kraftfahrzeugs. Des Weiteren betrifft die Erfindung ebenfalls eine Ladeeinrichtung, insbesondere einen Abgasturbolader eines Kraftfahrzeuges und ein dazugehöriges Verfahren zum Anbau eines Aktuators an eine derartige Ladeeinrichtung.

Aus der DE 10 2008 045 227 A1 ist ein Verfahren zum vereinfachten Anbau einer als Druckdose ausgebildeten Aktuators an einen Abgasturbolader bekannt. Zum Ausgleich von Toleranzen seitens des Abgasturboladers und seitens der Druckdose wird ein Stellhebel einer variablen Turbinengeometrie oder eines Wastegate-Ventils in eine vordefinierte Position gebracht. Dies kann zum Beispiel die Position des geschlossenen Wastegate-Ventils sein. Danach wird zwischen einer vordefinierten Anbauposition der Druckdose und dem Stellhebel der Abstand gemessen. Danach wird die Druckdose ebenfalls in eine vordefinierte Position gebracht und die Aktuatorstange des Aktuators an einer Stelle markiert. Dabei entspricht der Abstand dieser markierten Stelle zum Anbauflansch des Aktuators an den Abgasturbolader der Länge, die zuvor zwischen der vordefinierten Anbauposition des Aktuators und dem Stellhebel gemessen wurde. Darauffolgend wird der Aktuator mit dem Abgasturbolader mittels des Anbauflansches verbunden und die Aktuatorstange an der markierten Stelle mit dem Stellhebel verbunden. Durch ein derartiges Anbauverfahren eines Aktuators an einen Abgasturbolader können sowohl die Toleranzen des Abgasturboladers, insbesondere im Bereich des Wastegate-Ventils oder der variablen Turbinengeometrie, als auch die Toleranzen des Aktuators beziehungsweise der Druckdose kompensiert werden. Somit kann durch ein derartiges Verfahren ein Toleranzausgleich der Montage- und Fertigungstoleranzen eines Aktuators und einer Ladeeinrichtung gleichzeitig vorgenommen werden. Üblicherweise werden dabei Schnittstellenteile des Aktuators und/oder der Ladeeinrichtung während der Montage der Ladeeinrichtung miteinander insbesondere durch Anschweißen verbunden.

Nachteilig an einem derartigen Montageverfahren einer Ladeeinrichtung ist der hohe Aufwand, der im Wartungsfall auftritt, falls der Aktuator ausgetauscht werden soll. Dabei können die Toleranzen des Aktuators so groß sein, dass ein einfacher Austausch des Aktuators nicht möglich ist, wobei ein dem Montageverfahren der Ladeeinrichtung ähnliches Wartungsverfahren durchgeführt werden muss, damit beim Austausch des Aktuators die Montage- und Fertigungstoleranzen des neuen Aktuators und der alten Ladeeinrichtung berücksichtigt sind. Dies kann für den Endkunden beziehungsweise im Garantiefall für einen Hersteller der Ladeeinrichtung hohe Kosten mit sich bringen.

Die vorliegende Erfindung beschäftigt sich demzufolge mit dem Problem, für einen Aktuator einer Ladeeinrichtung, insbesondere eines Abgasturboladers in einem Kraftfahrzeug, und für ein dazugehöriges Herstellungsverfahren sowie für eine Ladeeinrichtung, insbesondere für einen Abgasturboladers eines Kraftfahrzeuges und ein dazugehöriges Anbauverfahren eines Aktuators an eine derartige Ladeeinrichtung eine verbesserte oder zumindest eine alternative Ausführungsform anzugeben, die sich insbesondere durch einen vereinfachten Austausch des Aktuators auszeichnet.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, bei einem Verfahren zur Herstellung eines toleranzbereinigten Aktuators für eine Ladeeinrichtung, insbesondere für einen Abgasturbolader eines Kraftfahrzeugs, wobei der Aktuator eine Regelbauteilgruppe, umfassend eine Regelstange und ein an die Regelstange anbindbares Anbindungselement, aufweist, den Aktuator in eine vordefinierte Stellung zu bringen und durch relatives Verschieben des Anbindungselementes zur Regelstange eine vorbestimmte Gesamtlänge der Regelbauteilgruppe einzustellen und dann das Anbindungselement mit der Regelstange zu verbinden. Durch ein derartiges Verfahren kann bezüglich einer vordefinierten Stellung des Aktuators durch relatives Verschieben des Anbindungselementes zur Regelstange eine vorbestimmte Gesamtlänge der Regelbauteilgruppe dargestellt werden. Dadurch kann vorteilhaft ein derartiger toleranzbereinigter Aktuator hergestellt werden. Da in diesem Fall bezüglich einer vordefinierten Stellung des Aktuators die Gesamtlänge der Regelbauteilgruppe eine vorbestimmte Länge einnimmt, sind die Positionstoleranzen des Aktuators bei einem derartigen mit einer voreingestellten Länge versehenen Aktuator kompensiert, was bedeutet, dass jeder Aktuator des gleichen Bautyps, der in einer vordefinierten Stellung eine vorbestimmte Länge aufweist, positionsbedingt vernachlässigbare Toleranzen aufweist. Wird somit ein derartiger Aktuator ausgetauscht, so muss eine Toleranzbereinigung nicht vorgenommen werden. Zum Beispiel in einem Wartungsfall kann demzufolge ein derartiger toleranzbereinigter Aktuator ohne aufwendige Toleranzbereinigung ausgetauscht werden. Dies verringert die Kosten für den Endkunden und gegebenenfalls im Garantiefall auch für den Hersteller der Ladeeinrichtung. Dabei versteht man unter Aktuatoren gleichen Bautyps Aktuatoren, die gleiche Spezifikationen aufweisen.

Ein weiterer allgemeiner Gedanke der Erfindung ist es, einen Aktuator für eine Ladeeinrichtung, insbesondere für einen Abgasturbolader eines Kraftfahrzeugs derartig auszubilden, dass der Aktuator eine Regelbauteilgruppe aufweist, mittels der zumindest Translationsbewegungen übertragen werden können, wobei die Gesamtlänge der Regelbauteilgruppe in einer vordefinierten Stellung des Aktuators eine vorbestimmte Länge aufweist.

Ein weiterer allgemeiner Gedanke der Erfindung ist ein Verfahren zum Anbau eines Aktuators an eine Ladeeinrichtung, insbesondere an einen Abgasturbolader eines Kraftfahrzeuges, bei dem der Aktuator relativ zur Ladeeinrichtung positioniert und fixiert wird, bei dem eine variable Turbinengeometrie oder ein Wastegate-Ventil der Ladeeinrichtung in eine vordefinierte Stellung gebracht wird, bei dem der Aktuator in eine vordefinierte Stellung gebracht wird, bei dem ein an eine Regelbauteilgruppe des Aktuators rotationsbeweglich angebundener Stellhebel mit einem Betätigungselement der variablen Turbinengeometrie oder des Wastegate-Ventils rotationsstarr verbunden wird. Da bei einem derartigen Verfahren zum Anbau eines Aktuators ein toleranzbereinigter Aktuator verwendet wird, sind lediglich die Montage- und Fertigungstoleranzen der Ladeeinrichtung beim Zusammenbau des Aktuators mit der Ladeeinrichtung während des Anbauverfahrens zu kompensieren.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und wer-den in der nachfolgenden Beschreibung näher erläutert, wobei sich gleiche Bezugszeichen auf gleiche oder ähnliche oder funktional gleiche Bauteile beziehen.

Es zeigen, jeweils schematisch:
- Fig. 1: einen toleranzbereinigbaren Aktuator,
- Fig. 2: einen toleranzbereinigten Aktuator,
- Fig. 3: den toleranzbereinigten Aktuator, positioniert und fixiert zu einer Ladeeinrichtung,
- Fig. 4: ein ausgerichtetes, in eine vorbestimmte Position verbrachtes Wastegate-Ventil,
- Fig. 5: den in einer Schweißposition positionierten Aktuator in Einbaulage mit der Ladeeinrichtung.

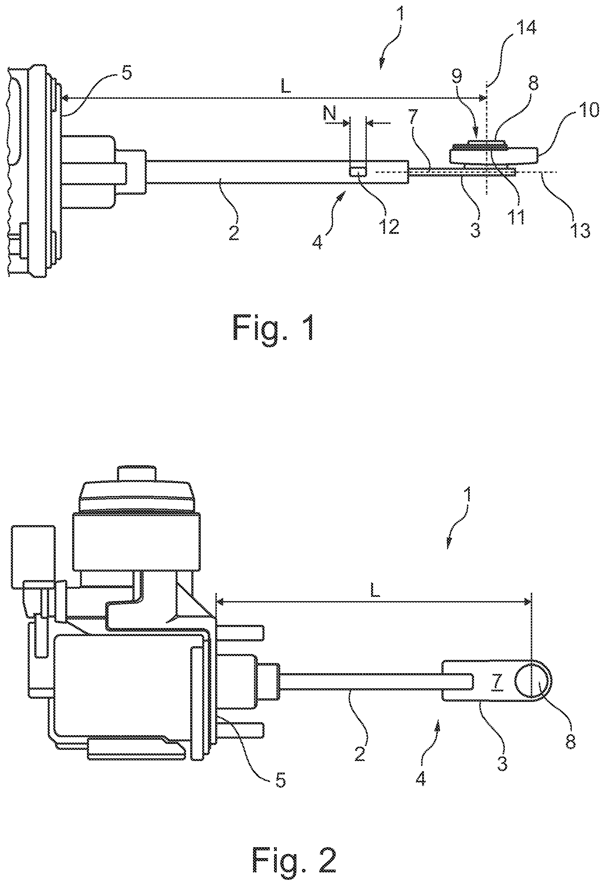

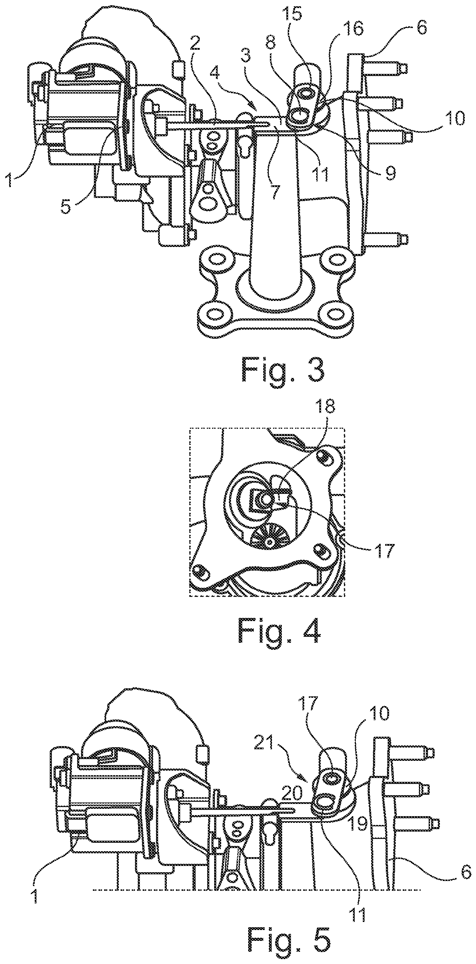

In der Fig. 1 ist ein Aktuator 1 vor der Endmontage dargestellt. Der Aktuator 1 weist dabei eine Regelstange 2 und ein Anbindungselement 3 auf. Im verbundenen Zustand bilden die Regelstange 2 und das Anbindungselement 3 zusammen eine Regelbauteilgruppe 4. Des Weiteren weist der Aktuator 1 einen Anbindungsflansch 5 auf, mit dem der Aktuator 1 an eine in der Fig. 3 gezeigte Ladeeinrichtung 6 angebunden werden kann. Dabei ist das Anbindungselement 3 aus einer Verbindungsplatte 7 und einer Anbindungskontur 8 aufgebaut. Die Anbindungskontur 8 kann als Pin oder Zapfen ausgebildet sein, der in einer Aussparung 9 eines Stellhebels 10 positioniert werden kann, und mittels eines Fixierelementes 11 zumindest rotationsbeweglich zum Stellhebel 10 fixiert werden kann. Dabei kann das Fixierelement 11 als Sicherungsring ausgebildet sein, der nach Positionierung der Anbindungskontur 8 in der Aussparung 9 auf dieselbe aufgeschoben wird.

Des Weiteren ist die Regelstange 2 mit einer Nut 12 ausgestattet, in die die Verbindungsplatte 7 des Anbindungselementes 3 eingeschoben werden kann. Durch Verschieben der Verbindungsplatte 7 in der Nut 12 entlang einer Längsache 13 der Regelstange 2 kann eine Gesamtlänge L der Regelbauteilgruppe 4 um die Ausgleichslänge N verändert werden. Dabei kann die Gesamtlänge L als Abstand zwischen dem Anbindungsflansch 5 und einer Mittelachse 14 der als Pin oder Zapfen ausgebildeten Anbindungskontur 8 bestimmt werden. Zur Ausbildung eines toleranzbereinigten Aktuators 1 wird, nachdem der Aktuator 1 in eine vordefinierte Stellung gebracht worden ist, die Gesamtlänge L durch Verschieben der Verbindungsplatte 7 in der Nut 12 entlang der Längsachse 13 eingestellt.

Dabei kann eine vordefinierte Stellung des Aktuators 1 eine definierte Stellung des Getriebes und/oder eine definierte Stellung des Lagesensors und/oder eine definierte Stellung der Regelstange 2 sein. Eine derartige vordefinierte Stellung des Aktuators 1 kann durch ein Signal, mit dem der Aktuator beaufschlagt wird, eingestellt werden oder mittels eines Signals z.B. eines Sensors detektiert werden. Nach Ausrichtung der Verbindungsplatte 7 in der Nut 12 wird die Regelstange 2 im Bereich der Nut 12 mit der Verbindungsplatte 7 verbunden. Das Verbinden kann durch Verschrauben, Verkleben, Verschweißen, Vernieten, Verpressen oder dergleichen vorgenommen werden. Nach dem endgültigen Fixieren der Verbindungsplatte 7 mit der Regelstange 2 weist ein derartiger toleranzbereinigter Aktuator 1 bezüglich einer vordefinierten Stellung des Aktuators eine vorbestimmte Gesamtlänge L auf.

Ein fertiggestellter, toleranzbereinigter Aktuator 1 ist in Fig. 2 dargestellt.

Die Fig. 3 zeigt den Aktuator 1 in Einbaulage mit der Ladeeinrichtung 6. Dabei ist der Aktuator 1 nach dem vorhergehend beschriebenen Verfahren toleranzbereinigt und mit dem Stellhebel 10, zum Beispiel wie vorhergehend beschrieben, verbunden. Dabei ist der Stellhebel 10 rotationsbeweglich gegenüber der Anbindungskontur 8 mit der Regelbauteilgruppe 4 verbunden. Eine weitere Aussparung 15 des Stellhebels 10 wird über einer Öffnung 16 der Ladeeinrichtung 6 positioniert, wobei die Öffnung 16 zur Aufnahme eines Betätigungselementes 17 ausgebildet ist.

Gemäß Fig. 4 kann ein derartiges Betätigungselement 17 als Spindel oder Zapfen ausgebildet sein, der zum Beispiel im Fall eines Wastegate-Ventils, rotationsstarr mit einer Klappe 18 des Wastegate-Ventils verbunden ist. Zur Ausrichtung wird nun das Betätigungselement 17 in die Öffnung 16 eingeschoben und die Klappe 18 des Wastegate-Ventils in eine vordefinierte Position verbracht. Dabei kann die vordefinierte Position die Position des geschlossenen Wastegate-Ventils sein.

Wie in Fig. 5 dargestellt, wird dann das Betätigungselement 17 in der weiteren Aussparung 15 des Stellhebels 10 angeordnet. Der toleranzbereinigte Aktuator 1 wird nach Positionierung des Betätigungselementes 17 in der weiteren Aussparung 15 in eine Mittelposition 19 gebracht und langsam in eine Verbindungsposition 20 gefahren, um Spiel aus dem System zu nehmen. Dabei wird während dieser Bewegung des Aktuators 1 die variable Turbinengeometrie beziehungsweise das Wastegate-Ventil in der jeweiligen vordefinierten Position fixiert. Nach Erreichen der Verbindungsposition 20 wird an der Verbindungsstelle 21 das Betätigungselement 17 mit dem Stellhebel 10 verbunden. Bevorzugt ist dabei die Verbindungsstelle 21 als Schweißstelle ausgebildet.

Demzufolge sind die Fertigungs- beziehungsweise Montagetoleranzen des Aktuators 1 und der Ladeeinrichtung 6 soweit kompensiert, dass sie vernachlässigbar sind. Da nun der Aktuator 1 über die Anbindungskontur 8 des Anbindungselementes 3 mittels eines Fixierelementes 11 mit dem Stellhebel 10 verbunden ist, kann durch Lösen des Fixierelementes 11 der Aktuator 1 von dem Stellhebel 10 getrennt werde. Nach Lösen des Anbindungsflansches 5 kann der Aktuator 1 vollständig von der Ladeeinrichtung 6 getrennt werden. Da der Aktuator 1 toleranzbereinigt ausgebildet ist, kann er somit schnell ausgetauscht werden und nach Verbinden des neuen ausgetauschten Aktuators 1 mittels des Fixierelementes 11 mit dem Stellhebel 10 ist die Funktion der Ladeeinrichtung 6 im Zusammenspiel mit dem Aktuator 1 wie zuvor gegeben.

Bevorzugt wird als Aktuator 1 ein elektrischer Aktuator verwendet und besonders bevorzugt ein elektrischer Wastegate-Steller.

Nach erfolgtem Zusammenbau des Aktuators 1 mit der Ladeeinrichtung 6 kann nach dem Verbinden des Betätigungselementes 17 mit dem Stellhebel 10 sowohl der Einstellwert des Aktuators bei einem geschlossenen Wastegate-Ventil oder einer geschlossenen variablen Turbinengeometrie als auch die Konzentrizität der Regelstange vermessen werden. Dabei kann die Vermessung auf einer Koordinatenmessmaschine erfolgen.

Im Falle des Verschweißens des Betätigungselementes 17 mit dem Stellhebel 10 kann mittels eines Lasers die Schweißstelle auf 500 +/- 100 °C vorgewärmt werden und dann das Verschweißen des Betätigungselementes 17 mit dem Stellhebel 10 mittels eines Festkörperlasers vorgenommen werden.

## Patentansprüche

1. Verfahren zur Herstellung und Montage eines toleranzbereinigten Aktuators (1) an einer Ladeeinrichtung (6), insbesondere für einen Abgasturbolader eines Kraftfahrzeugs, wobei der Aktuator (1) eine Regelbauteilgruppe (4), umfassend eine Regelstange (2) und ein an die Regelstange (2) anbindbares Anbindungselement (3), aufweist, bei dem
a) der zu toleranzbereinigende Aktuator (1) in eine vordefinierte Stellung gebracht wird, insbesondere mittels eines definierten Signals,
b) durch relatives Verschieben des Anbindungselementes (3) zur Regelstange (2) eine vorbestimmte Gesamtlänge (L) der Regelbauteilgruppe (4) eingestellt wird,
c) das Anbindungselement (3) mit der Regelstange (2) fest verbunden wird,
d) der toleranzbereinigte Aktuator (1) relativ zu der Ladeeinrichtung (6) positioniert und fixiert wird,
e) eine variable Turbinengeometrie oder ein Wastegateventil der Ladeeinrichtung (6) in eine vordefinierte Stellung gebracht wird,
f) der toleranzbereinigte Aktuator (1) in eine vordefinierte Stellung gebracht wird,
g) und anschließend ein an eine Regelbauteilgruppe (4) des toleranzbereinigten Aktuators (1) rotationsbeweglich angebundener Stellhebel (10) mit einem Betätigungselement (17) der variablen Turbinengeometrie oder des Wastegateventils rotationsstarr verbunden wird.

2. Verfahren nach Anspruch 1,
**dadurch gekennzeichnet, dass**
zur Einstellung der Gesamtlänge (L) des Anbindungselementes (3) eine Verbindungsplatte (7) des Anbindungselementes (3) in einer Nut (12) der Regelstange (2) eingeschoben wird.

3. Verfahren nach Anspruch 1 oder 2,
**dadurch gekennzeichnet, dass**
das als Spindel oder Zapfen ausgebildete Betätigungselement (17) in eine weitere Aussparung (15) des Stellhebels (10) eingeführt wird.

## Claims

1. Method for producing and mounting a tolerance-corrected actuator (1) on a supercharging device (6), in particular for an exhaust-gas turbocharger of a motor vehicle, wherein the actuator (1) has a regulating component assembly (4), comprising a regulating rod (2) and a connecting element (3) which can be connected to the regulating rod (2), in which
a) the actuator (1) to be tolerance-corrected can be brought into a predefined position, in particular by means of a defined signal,
b) a predetermined overall length (L) of the regulating component assembly (4) can be adjusted by shifting the connecting element (3) relative to the regulating rod (2),
c) the connecting element (3) is connected to the regulating rod (2) in a fixed manner,
d) the tolerance-corrected actuator (1) is positioned and fixed relative to the supercharging device (6),
e) a variable turbine geometry or a wastegate valve of the supercharging device (6) is brought into a predefined position,
f) the tolerance-corrected actuator (1) is brought into a predefined position,
g) and then an adjusting lever (10) rotatably movably connected to a regulating component assembly (4) of the tolerance-corrected actuator (1) is connected in a rotationally rigid manner to an actuating element (17) of the variable turbine geometry or of the wastegate valve.

2. Method according to claim 1,
**characterised in that**
a connecting plate (7) of the connecting element (3) is pushed into a groove (12) of the regulating rod (2) to adjust the overall length (L) of the connecting element (3).

3. Method according to claim 1 or 2,
**characterised in that**
the actuating element (17) designed as a spindle or stud is introduced into a further recess (15) of the adjusting lever (10).

## Revendications

1. Procédé de fabrication et de montage d'un actionneur à rattrapage des tolérances (1) sur un dispositif de suralimentation (6), en particulier pour un turbocompresseur à gaz d'échappement d'un véhicule automobile, dans lequel l'actionneur (1) présente un groupe de composants de réglage (4) comprenant une barre de réglage (2) et un élément de raccordement (3)pouvant être raccordé à la barre de réglage (2), dans lequel
a) l'actionneur à rattrapage des tolérances (1) est placé dans une position prédéfinie, en particulier au moyen d'un signal défini,
b) une longueur totale prédéterminée (L) du groupe de composants de réglage (4) est ajustée par un décalage relatif de l'élément de raccordement (3) par rapport à la barre de réglage (2),
c) l'élément de raccordement (3) est relié fixement à la barre de réglage (2),
d) l'actionneur à rattrapage des tolérances (1) est positionné et fixé relativement au dispositif de suralimentation (6),
e) une géométrie de turbine variable ou une soupape à limitateur de pression (« wastegate ») du dispositif de suralimentation (6) est placée dans une position prédéfinie,
f) l'actionneur à rattrapage des tolérances (1) est placé dans une position prédéfinie,
g) et ensuite un levier de réglage (10) raccordé de façon mobile en rotation à un groupe de composants de réglage (4) de l'actionneur à rattrapage des tolérances (1) est relié de façon fixe en rotation à un élément d'actionnement (17) de la géométrie de turbine variable ou de la soupape wastegate.

2. Procédé selon la revendication 1,
**caractérisé en ce que**
pour le réglage de la longueur totale (L) de l'élément de raccordement (3) une plaque de liaison (7) de l'élément de raccordement (3) est insérée dans une rainure (12) de la barre de réglage (2).

3. Procédé selon la revendication 1 ou 2,
**caractérisé en ce que**
l'élément d'actionnement (17) conçu comme une broche ou un tenon est introduit dans un autre évidement (15) du levier de réglage (10).
